# EUROPEAN PATENT APPLICATION

(11) **EP 3 001 098 A1**
(43) Date of publication of application: **30.03.2016**
(21) Application number: 15172429.1
(22) Date of filing: 20.10.2009
(51) Int. Cl.: F21S 8/00, G02B 27/09, G02B 19/00, F21W 131/406, F21Y 115/10

(54) **A LIGHT COLLECTION SYSTEM FOR AN LED LUMINAIRE**

(30) Priority: 20.10.2008 US 106969 P; 19.10.2009 US 581788
(62) Divisional of application: 09013250.7
(71) Applicant: ROBE lighting s.r.o., 75661 Roznov pod Radhostem (CZ)
(72) Inventor: Pavel, Jurik, 75661 Roznov pod Radhostem (CZ)
(74) Representative: Käck, Stefan

(57) **Abstract**

A light beam collection engine (320) for LED array or other multi-source light luminaries (360). The light beam collection system incorporates a light integrator (306) which collects and integrates/homogenizes the light from a plurality of light sources (140) in configured in a array (130). The engine (320) is particularly useful in luminaries (360) that are used in light systems that employ beam modulation elements (362, 364, 366) where it is desirable to have a tight or narrow light beam.

## Description

### TECHNICAL FIELD OF THE INVENTION

The present invention generally relates to a method for controlling the light output from an array oF LEDs when used in a light beam producing luminaire, specifically to a method relating to improving light collection efficiency and beam homogenization.

### BACKGROUND OF THE INVENTION

High power LEDs are commonly used in luminaires for example in the architectural lighting industry in stores, offices and businesses; and/or in the entertainment industry in theatres, television studios, concerts, theme parks, night clubs and other venues. These LEDs are also being utilized in automated lighting luminaires with automated and remotely controllable functionality. For color control it is common to use an array of LEDs of different colors. For example a common configuration is to use a mix of Red, Green and Blue LEDs. This configuration allows the user to create the color they desire by mixing appropriate levels of the three colors. For example illuminating the Red and Green LEDs while leaving the Blue extinguished will result in an output that appears Yellow. Similarly Red and Blue will result in Magenta and Blue and Green will result in Cyan. By judicious control of the LED controls the user may achieve any color they desire within the color gamut set by the LED colors in the array. More than three colors may also be used and it is well known to add an Amber or White LED to the Red, Green and Blue to enhance the color mixing and improve the gamut of colors available.

The optical systems of such luminaires may include a gate or aperture through which the light is constrained to pass. Mounted in or near this gate may be devices such as gobos, patterns, irises, color filters or other beam modifying devices as known in the art.

. A typical product will often provide control over the pan and tilt functions of the luminaire allowing the operator to control the direction the luminaire is pointing and thus the position of the light beam on the stage or in the studio. Additionally the light may offer multiple remotely selectable patterns or gobos containing images that the operator can select and project. Such gobos may be rotatable, also under remote control, or static. The light may further offer color control systems that provide either or both fixed color filters or color mixing systems based on subtractive colors.

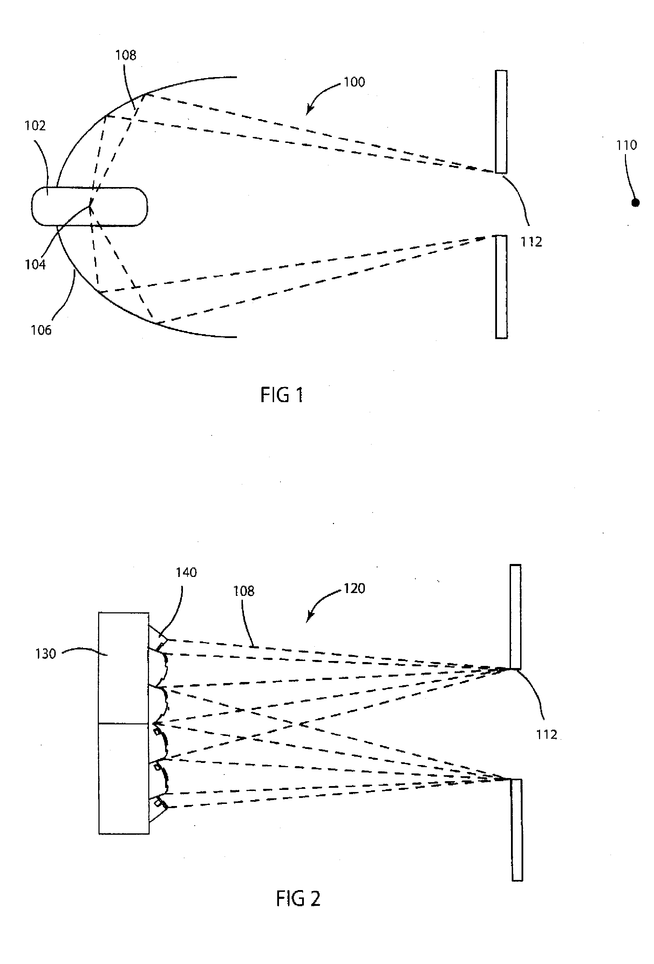

**Figure 1** illustrates a prior art system **100** where a light source **102** is positioned at or close to one of the focal points **104** of an elliptical reflector **106** such that the light **108** from light source **102** is reflected by the reflector **106** towards the second focal point **110** of the reflector **106**. Aperture **112** is positioned close to the second focal point **110** of reflector **106** and a substantial proportion of the light **108** from light source **102** will pass through this aperture **112** and into downstream optics (not shown).

**Figure 2** illustrates a systems **120** resulting from a attempts to mimic a beam generation systems like the ones illustrated in **Figure 1** with an array **130** of LEDs **140**. Each LED **140** has an associated optical system which may include reflectors, TIR devices, diffusers, gratings or other well known optical devices so as to direct the light from the LED **140** in a narrow beam towards aperture **112**. However, the array of LEDs **140** may be large compared to the aperture **112** and each LED **140** may be of differing colors. This causes the light beam when it passes through the aperture **112** to be non-homogeneous with respect to color and distribution resulting in an unsatisfactory output from the luminaire where different areas are different in color and output. An example of such a system **120** is disclosed in US Patent No. 7,152,996 by Luk. These attempts have also been made where the LEDs **140** are configured to mimic the shape of the elliptical reflector **106** like that in **Figure 1**.

Additionally the large size of the LED array **130** and the necessary spacing between the LED array **130** and the aperture **112** compared to the aperture **112** may result in very inefficient coupling of light from the array **130** through the aperture **112** with much of the light **108** from LEDs **140** missing aperture **112** or spreading outside of its periphery.

There is a need for a light collection system for an LED array based luminaire which can efficiently gather the light emitted from the LED array, homogenize the beam and deliver it to an aperture and downstream optical systems.

### SUMMARY OF THE INVENTION

The invention is defined in claims 1 and 2, respectively. Particular embodiments of the invention are set out in the dependent claims.

### BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:
- FIGURE 1: illustrates a prior art light collection beam generation system;
- FIGURE 2: illustrates another prior art light collection beam generation system;
- FIGURE 3: illustrates perspective view of an embodiment of the invention;
- FIGURE 4: illustrates a cross-sectional layout diagram of an embodiment of the invention;
- FIGURE 5: illustrates a cross-sectional layout diagram of an embodiment of the invention;
- FIGURE 6: illustrates a cross-sectional layout diagram of an exemplary embodiment of the invention;
- FIGURE 7: illustrates a perspective view of an exemplary embodiment of the invention;
- FIGURE 8: illustrates a cross-sectional layout diagram of an embodiment of the invention; and
- FIGURE 9: illustrates a cross-sectional layout diagram of an embodiment of the invention.

### DETAILED DESCRIPTION OF THE INVENTION

Preferred embodiments of the present invention are illustrated in the FIGURES, like numerals being used to refer to like and corresponding parts of the various drawings.

The present invention generally relates to a method for controlling the light output from an array of LEDs when used in a light beam producing luminaire, specifically to a method relating to improving light collection efficiency and beam homogenization of the array.

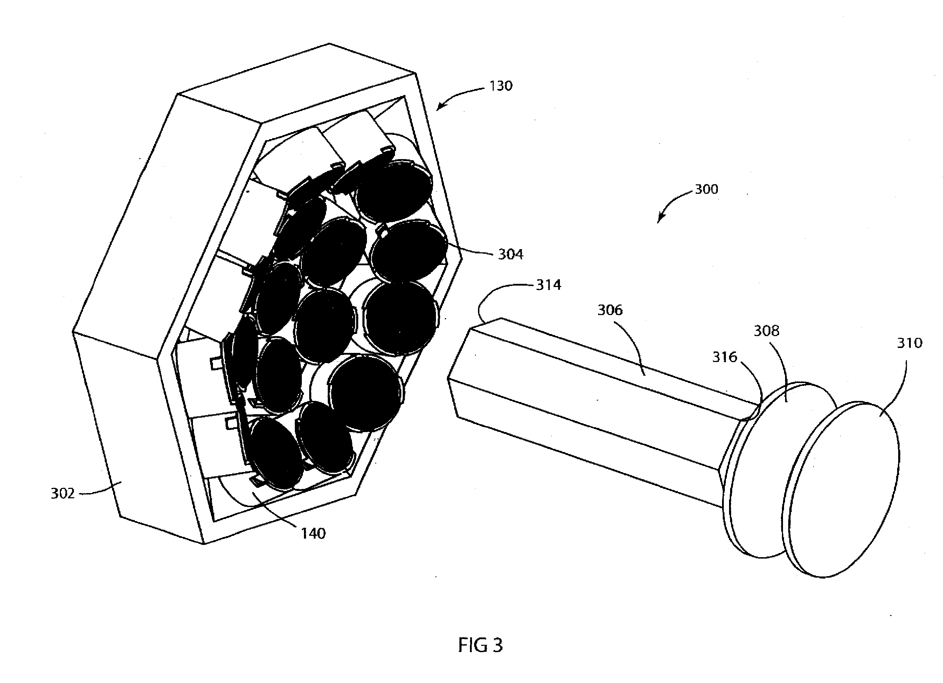

**Figure 3** illustrates an embodiment of an LED collection system **300** the invention where an array of LED light sources **140** are mounted to a carrier **302** such that each LED light source in the array is generally aimed towards light integrator **306**. Each LED light source **140** may be fitted with its own optical element **304**. Optical element **304** is an optional component in the system and may be a lens, lens array, micro-lens array, holographic grating, diffractive grating, diffuser, or other optical device known in the art the purpose of which is to control and direct the light from LED light source **140** towards the entry port **314** of the light integrator **306**. Each LED light source element **140** may contain a single LED die or an array of LED dies utilizing the same optical element **304**. Such arrays of LED dies within LED light source **140** may be of a single color and type or may be of multiple colors such as a mix of Red, Green and Blue LEDs. Any number and mix of colors of LED dies may be used within each LED light source **140** without departing from the spirit of the invention.

Light integrator **306** is a device utilizing internal reflection so as to homogenize and constrain the light from LED light sources **140**. Light integrator **306** may be a hollow tube with a reflective inner surface such that light impinging into the entry port **314** may be reflected multiple times along the tube before leaving at the exit port **316**. As the light is reflected down the tube in different directions from each LED light source **140** the light beams will mix forming a composite beam where different colors of light are homogenized and an evenly colored beam is emitted. Light integrator **306** may be a square tube, a hexagonal tube, a circular tube, an octagonal tube or a tube of any other cross section. In a further embodiment light integrator **306** may be a solid rod constructed of glass, transparent plastic or other optically transparent material where the reflection of the incident light beam within the rod is due to total internal reflection (TIR) from the interface between the material of the rod and the surrounding air. The integrating rods may be circular, other polygonal or irregular cross-sectional shape.

The homogenized light exits from the light integrator **306** and may then be further controlled and directed by other optical elements **308** and **310**. Optical system **308** and **310** may be condensing lenses designed to produce an even illumination for additional downstream optics (described below).

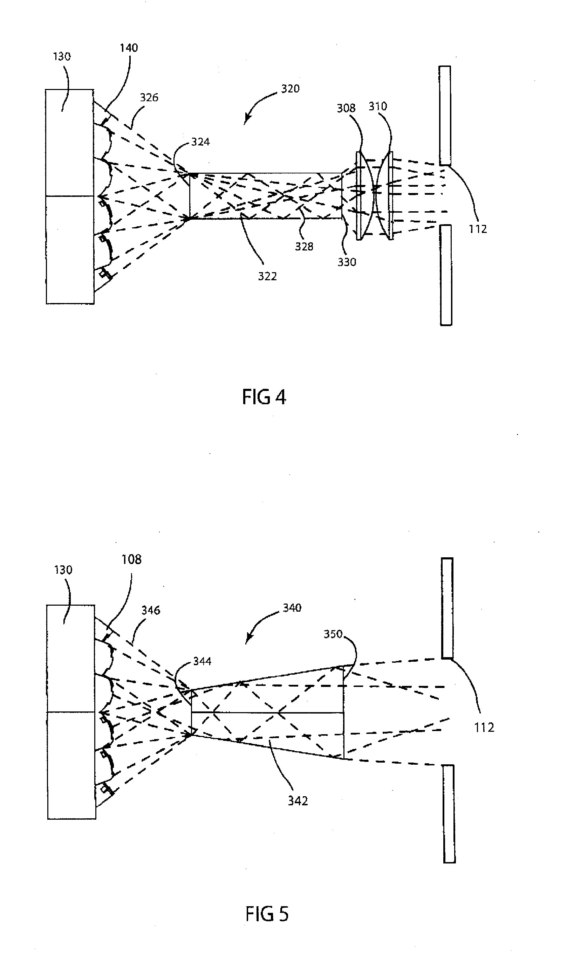

**Figure 4** illustrates a layout diagram of an embodiment of the invention showing the approximate path of light as it passes through the system **320**. An array of LED light sources **140** each direct light **326** into the entrance aperture **324** of light integrator **322**. Within light integrator **322** the light beams **328** may reflect from the walls any number of times from zero to a number defined by the geometry of the tube **322** and the entrance angle and position of the incident light. This variation in path length and the different numbers of reflections causes homogenization of the light beams within light integrator **322**. A feature of a light integrator **322** which comprises a hollow or tube or solid rod where the sides of the rod or tube are essentially parallel and the entrance aperture **324** and exit aperture **330** are of the same size is that the divergence angle of light exiting the integrator **322** will be the same as the divergence angle for light **326** entering the integrator **322**. Thus a parallel sided integrator **322** has no effect on the beam divergence. Light exiting the light integrator **322** is further controlled and directed by optical elements **308** and **310** which may form a conventional condensing lens system, to direct light towards aperture **112**. Condensor lens systems tend to collimate the light and produce a more parallel beam. Although two optical elements **308** and **310** are herein illustrated the invention is not so limited and any optical system as known in the art may be utilized to direct the exit beam towards aperture **112**.

**Figure 5** illustrates a layout diagram of a further embodiment **340** of the invention showing the approximate path of light as it passes through the system **340**. An array of LED light sources **140** directs light into the entrance aperture **344** of tapered light integrator **342**. Within tapered light integrator **342** the light beams **346** may reflect from the walls any number of times from zero to a number defined by the geometry of the tube and the entrance angle and position of the incident light. This variation in path length and the different numbers of reflections causes homogenization of the light beams within light integrator **342**. A feature of a tapered light integrator **342** which comprises a hollow or tube or solid rod where the sides of the rod or tube are tapered and the entrance aperture **344** is smaller than the exit aperture **350** is that the divergence angle of light exiting the integrator **342** will be smaller than the divergence angle for light entering the integrator **342**. The combination of a smaller divergence angle from a larger aperture **350** serves to conserve the etendue of the system **340**. Thus a tapered integrator **342** may provide similar functionality to the condensing optical system **308** and **310** illustrated in **Figure 4** and light may be delivered directly to aperture **112** without any need for further optical components to control and shape the beam.

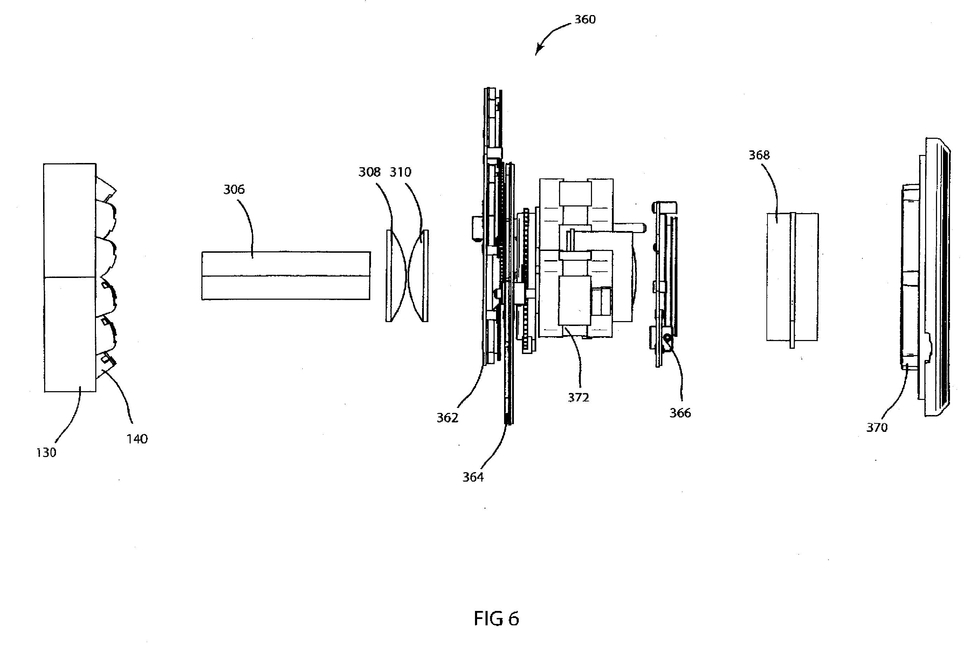

**Figure 6** illustrates an exemplary embodiment **360** of the invention as it may be used in an automated luminaire **360**. An array of LED light sources **140** directs light into the entrance aperture of light integrator **306**. Within light integrator **306** variation in path length and the different numbers of reflections causes homogenization of the light beams. Light exiting the light integrator **306** is further controlled and directed by optical elements **308** and **310** which may form a conventional condensing lens system, to direct light towards the remainder of the optical system. Although two optical elements **308** and **31.0** are herein illustrated the invention is not so limited and any optical system as known in the art may be utilized to direct the light.

The emergent homogenized light beam may be directed through a series of optical devices as well known within automated lights. Such devices may include but not be restricted to rotating gobos **362**, static gobos **364**, iris **366**, color mixing systems utilizing subtractive color mixing flags, color wheels, framing shutters, frost and diffusion filters and, beam shapers. The final light beam may then pass through a series of objective lenses **368** and **370** which may provide variable beam angle or zoom functionality as well as the ability to focus on various components of the optical system before emerging as the required light beam.

Optical elements such as rotating gobos **362**, static gobos **364**, color mixing systems, color wheels and iris **366** may be controlled and moved by motors **372**. Motors **372** may be stepper motors, servo motors or other motors as known in the art.

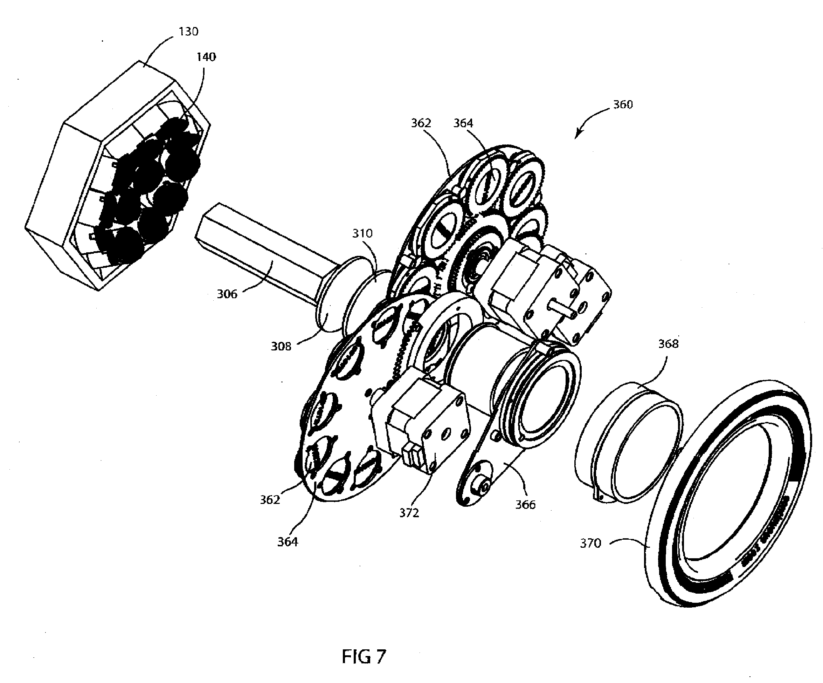

**Figure 7** illustrates a perspective view of an exemplary embodiment **360** of the invention as it may be used in an automated lum.inaire **360.** An array of LED light sources **140** directs light into the entrance aperture of light integrator **306**. Within light integrator **306** variation in path length and the different numbers of reflections causes homogenization of the light beams. Light exiting the light integrator **306** is further controlled and directed by optical elements **308** and **310** which may form a conventional condensing lens system, to direct light towards the remainder of the optical system. Although two optical elements **308** and **310** are herein illustrated the invention is not so limited and any optical system as known in the art may be utilized to direct the light.

The emergent homogenized light beam may be directed through a series of optical devices as well known within automated lights. Such devices may include but not be restricted to rotating gobo wheel **362** containing multiple patterns or gobos **624**, static gobo wheel **364** containing multiple patterns or gobos **622**, iris **366**, color mixing systems utilizing subtractive color mixing flags, color wheels, framing shutters, frost and diffusion filters and, beam shapers. The final light beam may then pass through a series of objective lenses **368** and **370** which may provide variable beam angle or zoom functionality as well as the ability to focus on various components of the optical system before emerging as the required light beam.

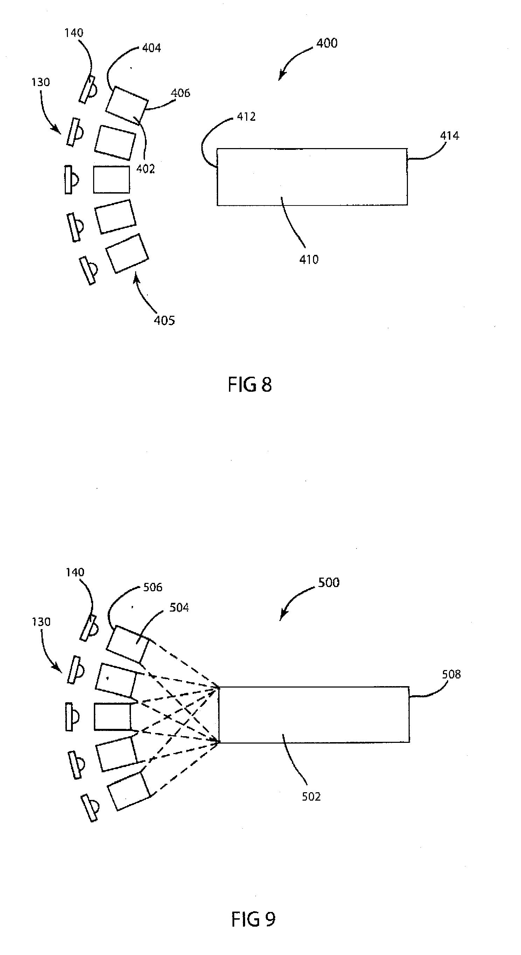

**Figure 8** illustrates a further embodiment **400** of the invention incorporating individual light integrators **402**. Each element **140** in an array **130** of LED light sources **140** directs light into the associated entrance aperture **404** of an array of light integrators **405**. Within light integrators **402** the light beams may reflect from the walls any number of times from zero to a number defined by the geometry of the tube and the entrance angle and position of the incident light. This variation in path length and the different numbers of reflections causes homogenization of the light beams within light integrators **402**. The light integrators **402** further serve to move the effective optical position of the LED light sources **140** closer together and closer to the main integrator **410**. The output of the array of light integrators **405** is optionally directed into main light integrator **410** as disclosed in **Figure 4** and **Figure 5**. Alternatively the output of light integrators **402** may directly enter the aperture (not shown) and other optical systems (not shown) of the luminaire with no need for further integration of homogenization.

**Figure 9** illustrates a further embodiment **500** of the invention similar to the embodiment **400** illustrated in **Figure 8**. The embodiment **500** in **Figure 9** illustrates an integrator that incorporates both the main integrator **410** with the individual LED light integrators **402**. The integrator **502** has multiple extensions **504** with entry apertures 506 for receiving light from the LEDs **140** in the array **130**.

In each of the embodiments described and in further embodiments, the LED light sources **140** may be a single LED or a sub-array of LEDs and may be of a single color and type or may be of multiple colors such as a mix of Red, Green and Blue LEDs. Any number and mix of colors of LEDs may be used within each LED light source **140** without departing from the spirit of the invention.

While the invention has been described with respect to a limited number of embodiments, those skilled in the art, having benefit of this disclosure, will appreciate that other embodiments may be devised which do not depart from the scope of the disclosure as disclosed herein. The invention has been described in detail, it should be understood that various changes, substitutions and alterations can be made hereto without departing from the scope of the disclosure.

## Claims

1. A multi-parameter luminaire comprising:
a plurality of light sources emitting light directed toward an inlet aperture of
an elongated light beam integrator which receives the light from the plurality of light sources and homogenizes the light via internal reflection toward an outlet aperture.

2. A light-beam engine comprising:
a plurality of light sources emitting light directed toward an inlet aperture of
an elongated light beam integrator which receives the light from the plurality of light sources and homogenizes the light via internal reflection toward an outlet aperture.

3. The multi-parameter luminaire of claim 1 or the light-beam engine of claim 2 wherein:
A plurality of the light sources are an array of LED's.

4. The multi-parameter luminaire of claim 1 or the light-beam engine of claim 2 wherein the plurality of light sources generate light of a plurality of individual colors.

5. The multi-parameter luminaire of claim 1 or the light-beam engine of claim 2 wherein:
the light beam integrator is hollow with a reflective internal surface.

6. The multi-parameter luminaire of claim 1 or the light-beam engine of claim 2 wherein:
the light beam integrator is solid and constructed of material(s) that results in internal reflectance for the angle of incidence of the light entering the inlet aperture of the light beam integrator.

7. The multi-parameter luminaire or the light-beam engine of claim 5 wherein the elongated light beam integrator has a smooth sided cross-section.

8. The multi-parameter luminaire or the light-beam engine of claim 7 wherein the smooth sided cross-section is circular.

9. The multi-parameter luminaire or the light-beam engine of claim 5 wherein:
the elongated light beam integrator has a polygonal cross-section.

10. The multi-parameter luminaire or the light-beam engine of claims 9 wherein:
the polygonal cross section of the light beam integrator matches the shape of the array of the plurality of cross-sections.

11. The multi-parameter luminaire of claim 1 or the light-beam engine of claim 2 wherein:
the light sources are configured in an two dimensional array.

12. The multi-parameter luminaire of claim 1 or the light-beam engine of claim 2 wherein:
the light sources are configured in the two dimensional array is configured in a three-dimensional space.

13. The multi-parameter luminaire or the light-beam engine of claim 12 wherein:
the light sources are generally configured in elliptical fashion with the first focus near the center of the inlet aperture of the beam integrator.

14. The multi-parameter luminaire of claim 1 or the light-beam engine of claim 2 wherein:
cross-sectional area of the inlet aperture of the light beam integrator is smaller than the cross-sectional area of the outlet aperture of the light beam integrator.

15. The multi-parameter luminaire of claim 1 or the light-beam engine of claim 2 wherein:
a condensor lens system collimates light emitted from the outlet aperture of the elongated light beam integrator.
